# EUROPEAN PATENT APPLICATION

(11) **EP 4 654 347 A1**
(43) Date of publication of application: **26.11.2025**
(21) Application number: 24177772.1
(22) Date of filing: 23.05.2024
(51) Int. Cl.: H01M 50/202, H01M 50/209, H01M 50/249, H01M 50/296, H01M 50/509, H01M 50/51

(54) **ELECTRIC BATTERY CELL FOR AN ELECTRIC ENERGY STORAGE SYSTEM OF A VEHICLE, ELECTRIC ENERGY STORAGE SYSTEM, VEHICLE, METHOD FOR PRODUCING AN ELECTRIC BATTERY CELL, METHOD FOR ADAPTING A NOMINAL VOLTAGE OF AN ELECTRIC BATTERY CELL**

(71) Applicant: Volvo Car Corporation, 405 31 Göteborg (SE)
(72) Inventor: WERBERG, Leopold, 40531 Göteborg (SE)
(74) Representative: Maiwald GmbH

(57) **Abstract**

The disclosure relates to an electric battery cell (10) for an electric energy storage system (100) of a vehicle. The battery cell (10) comprises a battery cell enclosure (12), and at least two electrode packages (14). Each of the at least two electrode packages (14) comprises at least one cathode and at least one anode. The at least two electrode packages (14) are connected in series. Moreover, the at least two electrode packages (14) are arranged inside the battery cell enclosure (12). Further, the disclosure relates to an electric energy storage system (100), a vehicle, a method for producing an electric battery cell (10) and a method for adapting a nominal voltage of an electric battery cell (10).

## Description

### TECHNICAL FIELD

The present disclosure relates to an electric battery cell, to an electric energy storage system and to a vehicle. Further, the present disclosure relates to a method for producing an electric battery cell and to a method for adapting a nominal voltage of an electric battery cell.

### BACKGROUND ART

Electric battery cells are the building blocks of electric energy storages for vehicles. In short, such electric energy storages may be called batteries or vehicle batteries. Each electric battery call has a certain nominal voltage and has certain dimensions. More generally speaking, each electric battery cell has certain electric properties and certain geometric properties. These electric properties and geometric properties determine the electric properties and the geometric properties of the electric energy storage. In this context, the electric battery cells may be electrically connected in series such that the nominal voltages of the electric battery cells add up to a nominal voltage of the electric energy storage. Moreover, the electric battery cells may be stacked in one or more row. Consequently, certain dimensions of the electric battery cells add up to a geometric dimension of the electric energy storage. The electric properties and the geometric properties of the electric battery cells also form constraints when conceiving electric energy storages of different electric properties and/or of different geometric properties. In other words, the electric properties and the geometric properties of the electric battery cells form constraints when conceiving an electric energy storage system that shall have, for example, a certain nominal voltage or, for example, certain geometric dimensions.

### SUMMARY

The objective to be solved by the present disclosure, thus, relates to alleviating the constraints resulting from electric battery cells when conceiving electric energy storages of different electric properties and/or of different geometric properties.

This problem is at least partially solved or alleviated by the subject matter of the independent claims of the present disclosure, wherein further examples are incorporated in the dependent claims and in the drawings.

According to a first aspect, an electric battery cell for an electric energy storage system of a vehicle, is provided. The battery cell comprises a battery cell enclosure. Moreover, the battery cell comprises at least two electrode packages. Each of the at least two electrode packages comprises at least one cathode and at least one anode. The at least two electrode packages are connected in series. Moreover, the at least two electrode packages are arranged inside the battery cell enclosure. In other words, the electric battery cell has two electrode packages which are arranged in the same battery cell enclosure.

By connecting the at least two electrode packages in series, the voltages delivered by each of the at least two electrode packages are summed up. I.e., the electric battery cell may deliver a voltage that is higher than the nominal voltage of one of the at least two electrode packages. Therefore, this cell design allows generating a comparatively high cell voltage, e.g. higher than electric battery cells according to the prior art. Consequently, comparatively few such electric battery cells are necessary for forming an electric energy storage system having a predefined nominal voltage. This facilitates conceiving such an electric energy storage. In this context, an electric storage capacity of the electric battery cell according to the first aspect may correspond to an electric storage capacity of at least two electric battery cells according to the prior art. As far as the geometric dimensions of the electric battery cell of the present disclosure are concerned, the geometric dimensions may correspond to the geometric dimensions of a combination of at least two electric battery cells according to the prior art. This has the effect that the at least two electric battery cells according to the prior art require a space of the same dimensions as the electric battery cell according to the present disclosure. Thus, the at least two electric battery cells according to the prior art may be easily replaced by an electric battery cell of the present disclosure. This further facilitates conceiving an electric energy storage system of predetermined electric properties and geometric properties. It is also possible that the electric battery cell according to the present disclosure is more compact than a combination of at least two electric battery cells according to the prior art. This allows to build a comparatively compact electric energy storage.

Each of the at least two electrode packages may comprise an electrode stack or an electrode roll. The electrode stack or the electrode roll may comprise a plurality of electrodes, wherein the plurality of electrodes of one electrode stack or one electrode roll form an electric series connection.

Inside the enclosure, an electrolyte may be provided.

According to one example, the at least two electrode packages consist of exactly two electrode packages.

According to one example, the electric battery cell further comprises a first electric terminal and a second electric terminal. The first electric terminal and the second electric terminal are arranged on an outside of the enclosure. Furthermore, a first electric end of the series-connected at least two electrode packages is electrically connected to the first electric terminal and a second electric end of the series-connected at least two electrode packages is electrically connected to the second electric terminal.

Thus, even though the electric battery cell comprises at least two electrode packages, it only comprises a first electric terminal and a second electric terminal, i.e. two electric terminals. Between the first electric terminal and the second electric terminal the voltage of the serial connection of the at least two electrode packages may be present as the nominal voltage of the electric battery cell. Thus, electrically connecting the electric battery cell is comparatively simple.

Via the first and second electric terminals, the battery cell may be connected to further electrical lines and in particular to first or second electric terminals of further electric battery cells or to an interface of the energy storage system the electric battery cell is provided in.

According to one example, the battery cell enclosure may have a prismatic or cuboid shape.

According to one example, the first electric terminal and the second electric terminal are arranged on the same side of the enclosure. Moreover, the first electric terminal and the second electric terminal are arranged in the same half of the side of the enclosure. The half may be one of two halves if the side is divided by a virtual vertical, horizontal or diagonal line. Each of these virtual lines may be an imaginary line on the respective side. This example is not limited to the example above, wherein the battery cell enclosure may have a prismatic or cuboid shape, but may also be combined with other forms of the electric battery cell. By arranging the first and second terminals according to this example, space in the respective other half is kept free, e.g. for positioning further elements on the side, like a degassing valve or fastening means. Moreover, such a configuration has the effect that the electric terminals are arranged relatively close to one another which facilitates an electric integration of the electric battery cell in an electric energy storage. According to one example, the first electric terminal and the second electric terminal are arranged on the same side of the enclosure, wherein the first electric terminal and the second electric terminal are arranged adjacent to diagonally opposite corners of a side of the enclosure This example is not limited to the example above, wherein the battery cell enclosure may have a prismatic or cuboid shape, but may also be combined with other forms of the electric battery cell. By arranging the first and second terminals according to this example, space on the respective side between the first and second terminal is kept free, e.g. for positioning further elements on the side, like a degassing valve or fastening means.

According to one example, the first electric terminal and the second electric terminal are arranged on the same side of the enclosure, wherein the first electric terminal and the second electric terminal are arranged in the same third or in the same fourth of the side of the enclosure. The third may be one of three thirds if the side is divided by two virtual vertical, horizontal or diagonal lines. Each of these virtual lines may be an imaginary line on the respective side. Thereby the thirds having the same surface area. In particular, the third, the first terminal and the second terminal are arranged on, maybe a side or a middle third of the three thirds. The fourth may be one of four fourths if the side is divided by three virtual vertical, horizontal or diagonal lines or by two virtual lines in particular perpendicular to each other. Each of these virtual lines may be an imaginary line on the respective side. Thereby, the fourths having the same surface area. This example is not limited to the example above, wherein the battery cell enclosure may have a prismatic or cuboid shape, but may also be combined with other forms of the electric battery cell. Thus, in this example a comparatively large portion of the side of the enclosure is kept free from the electric terminals. Consequently, the above-mentioned effects and advantages apply to a particularly high extent.

According to one example, the enclosure is substantially cuboid and the first electric terminal and the second electric terminal are arranged on a smallest outer surface of the enclosure. This may allow a compact arrangement of the first electric terminal and the second electric terminal. In particular, if several cells according to this example are arranged in an electric energy storage system with a storage enclosure, only one opening in the storage enclosure is needed corresponding to the dimensions of this smallest outer surface to insert the battery cell into the storage enclosure provide access to the battery cells and their terminals.

According to one example, the battery cell comprises a degassing valve provided on the enclosure. The degassing valve is configured to reduce pressure caused by unintended chemical or thermal reactions of electrolyte inside the battery cell enclosure. For this purpose, the degassing valve may be configured to open the battery cell enclosure and release the pressure out of the battery cell enclosure when a predetermined pressure inside the enclosure is exceeded. This enhances operational safety of the electric battery cell.

According to one example, the degassing valve is arranged outside a virtual line extending between the first terminal and the second terminal. The virtual line may be an imaginary line on the respective side. Thus, the degassing valve may be arranged in a location that is convenient for an integration of the electric battery cell in an electric energy storage.

According to one example the degassing valve is arranged on a different side of the battery cell enclosure than the first electric terminal and/or the second electric terminal. According to this arrangement of the degassing valve, the degassing valve may be arranged on the battery cell enclosure independent from a position of the first electric terminal and/or the second electric terminal. This allows to arrange the degassing valve in a location that is convenient for an integration of the electric battery cell in an electric energy storage.

According to one example, each of the at least two electrode packages is configured to generate the same voltage between the respective at least one cathode and the respective at least one anode. Thus, the electric battery cell is configured to generate a voltage that is a multiple of the voltage generated by each of the at least two electrode packages. The factor of this multiplication corresponds to the number of electrode packages connected in series. Such a configuration is structurally simple.

According to one example, at least one of the at least two electrode packages is configured to generate a nominal voltage between 3.5 volts and 4.5 volts, particularly 4 volts. Consequently, the nominal voltage of at least one of the at least two electrode packages may be chosen such that it corresponds to a voltage usual for electric battery cells according to the prior art. This enhances integrability of the electric battery cell according to the present disclosure in an electric energy storage system comprising a plurality of electric battery cells.

According to one example, the series-connected at least two electrode packages are configured to generate a nominal voltage of at least 7 volts, particularly 8 volts. This voltage may be supplied via the first electric terminal and the second electric terminal. Consequently, the nominal voltage of the electric battery cell according to the present disclosure may be chosen such that it corresponds to a multiple, e.g. the double, of a voltage usual for electric battery cells according to the prior art. This enhances integrability of the electric battery cell according to the present disclosure in an electric energy storage system comprising a plurality of electric battery cells.

According to one example, an electric insulation means is provided between the at least two electrode packages. This ensures that besides the serial connection, no electric contact or connection is established inside the enclosure between the at least two electrode packages. The insulation means may be configured as or comprise a plate-shaped or sheet-shaped element.

According to one example, the first terminal and the second terminal are electrically insulated from each other. As the voltage of the battery cell is comparatively high due to the serial connection of the at least two electrode packages, electric arcing needs to be reliably avoided. This is ensured by the electric insulation.

Additionally or alternatively, electric connection lines connecting the serial connection of the at least two electrode packages to the first electric terminal and to the second electric terminal may be insulated against each other. This allows to arrange the electric connection lines comparatively close to one another, i.e. with a comparatively small space in between. At the same time electric arcing is reliably avoided.

In the following, further aspects of the present disclosure are described. Features related to these aspect or features of the subject matter of the following aspects that have been already described above, are understood as at least optional features of the following aspects.

Further, features or aspects described above in relation to the electric battery cell may be understood as features or aspects of the following aspects in modified form to the respective aspect.

According to a second aspect, an electric energy storage system for an electric vehicle is provided. The electric energy storage system comprises a plurality of electric battery cells according to the present disclosure, wherein the electric battery cells are electrically connected in series.

Due to the serial connection of the electric battery cells, a required voltage may be provided by the electric energy storage system by adding the voltages of the individual electric battery cells.

The storage characteristic required may be adjusted by selecting the number of electric battery cells as described above.

The electric energy storage system may be configured as a traction battery for the vehicle.

Due to the fact that the electric battery cells may be configured to provide a comparatively high voltage, comparatively few such electric battery cells may be necessary for forming the electric energy storage system. This facilitates conceiving such an electric energy storage system. In this context, an electric storage capacity of the electric battery cell according to the first aspect may correspond to an electric storage capacity of at least two electric battery cells according to the prior art. As far as the geometric dimensions of the electric battery cell of the present disclosure are concerned, the geometric dimensions may correspond to the geometric dimensions of a combination of at least two electric battery cells according to the prior art. This has the effect that the at least two electric battery cells according to the prior art require a space of the same dimensions as the electric battery cell according to the present disclosure. Thus, the at least two electric battery cells according to the prior art may be easily replaced by an electric battery cell of the present disclosure. This further facilitates conceiving an electric energy storage system of predetermined electric properties and geometric properties. It is also possible that the electric battery cell according to the present disclosure is more compact than a combination of at least two electric battery cells according to the prior art. This allows to build a comparatively compact electric energy storage system.

According to a third aspect, a vehicle comprising an electric energy storage system is provided. The electric energy storage system is an electric energy storage system according to the second aspect of the present disclosure. Thus, due to the above-mentioned properties of the electric battery cell according to the present disclosure and the electric energy storage system according to the present disclosure, the electric energy storage system may be well-adapted or well-suitable for the vehicle.

As has been mentioned before, the electric energy storage system may be configured as a traction battery of the vehicle.

According to a fourth aspect, a method for producing an electric battery cell is provided. The method comprises the following steps: providing at least two electrode packages, each of the at least two electrode packages comprising at least one cathode and at least one anode, electrically connecting the at least two electrode packages in series, and arranging the at least two electrode packages in a battery cell enclosure.

In particular, the order of the steps "electrically connecting the at least two electrode packages in series" and "arranging the at least two electrode packages in a battery cell enclosure" is arbitrary. Due to the fact that such an electric battery cell comprises at least two electrode packages, it may have a comparatively high nominal voltage. Consequently, comparatively few such electric battery cells are necessary for forming an electric energy storage system having a predefined nominal voltage. This facilitates conceiving such an electric energy storage system. In this context, an electric storage capacity of the electric battery cell according to the first aspect may correspond to an electric storage capacity of at least two electric battery cells according to the prior art. As far as the geometric dimensions of the electric battery cell of the present disclosure are concerned, the geometric dimensions may correspond to the geometric dimensions of a combination of at least two electric battery cells according to the prior art. This has the effect that the at least two electric battery cells according to the prior art require a space of the same dimensions as the electric battery cell according to the present disclosure. Thus, the at least two electric battery cells according to the prior art may be easily replaced by an electric battery cell of the present disclosure. This further facilitates conceiving an electric energy storage system of predetermined electric properties and geometric properties. It is also possible that the electric battery cell according to the present disclosure is more compact than a combination of at least two electric battery cells according to the prior art. This allows to build a comparatively compact electric energy storage system.

In addition, the method may comprise a step, wherein each end of the serial connection of the at least two electrode packages are connected to a first electric terminal and to a second electric terminal, respectively. The order of this step with respect to the steps "electrically connecting the at least two electrode packages in series" and "arranging the at least two electrode packages in a battery cell enclosure" is arbitrary.

According to a fifth aspect, a method for adapting a nominal voltage of an electric battery cell is provided. The electric battery cell comprises at least two electrode packages, wherein each of the at least two electrode packages comprises at least one cathode and at least one anode. The method comprises the following step(s): altering an electric connection of the at least two electrode packages from a series connection to a parallel connection or altering an electric connection of the at least two electrode packages from a parallel connection to a series connection.

By carrying out the step "altering an electric connection of the at least two electrode packages from a series connection to a parallel connection" the nominal voltage of the electric battery cell is reduced while the nominal electric capacity is kept constant.

By carrying out the step "altering an electric connection of the at least two electrode packages from a parallel connection to a series connection" the nominal voltage of the electric battery cell is increased while the nominal electric capacity is kept constant.

When altering the electric connection of the at least two electrode packages, the geometric properties of the electric battery cell may be kept constant. This means that the geometric properties of the electric battery cell do not change while the electric properties of the electric battery cell are altered.

Thus, using the present method, conceiving an electric energy storage system having predefined geometric properties and/or predefined electric properties is facilitated.

It should be noted that the above examples may be combined with each other irrespective of the aspect involved. Accordingly, the methods may be combined with structural features and, likewise, the battery cell, the energy storage system and the vehicle may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle according to the present disclosure comprising an electric energy storage system according to the present disclosure, wherein the electric energy storage system comprises electric battery cells according to the present disclosure,
- Figure 2: shows a portion of the electric energy storage system of Figure 1 when seen along direction II in Figure 1,
- Figure 3: shows a detail III of the electric energy storage system of Figure 2,
- Figure 4: shows a detail IV of the electric energy storage system of Figure 3,
- Figure 5: shows a top view of an electric battery cell of the electric energy storage system of Figures 1 to 4,
- Figure 6: shows the electric battery cell of Figure 5, wherein a lid of the electric battery cell has been removed,
- Figures 7 to 8: show different further examples of the electric battery cell according to the present disclosure.
- Figure 9: shows still further different examples of the electric battery cell according to the present disclosure, and
- Figure 10: shows additional examples of the electric battery cell according to the present disclosure.

### DETAILED DESCRIPTION

The Figures are merely schematic representations and serve only to illustrate examples of the disclosure. Identical or equivalent elements are in principle provided with the same reference signs.

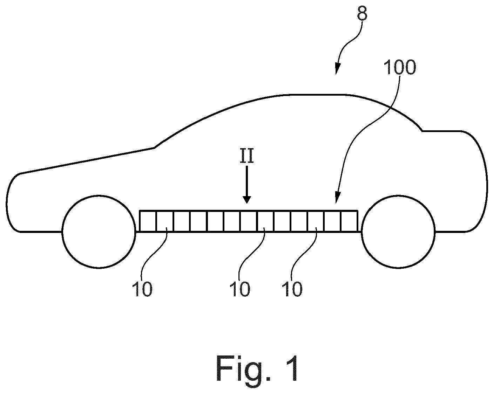

Figure 1 shows a vehicle 8 which in the present example is a battery electric vehicle.

Thus, the vehicle 8 comprises an electric energy storage system 100 which is configured as a traction battery. This means that the energy stored in the electric energy storage system 100 is used for driving or propelling the vehicle 8.

The electric energy storage system 100 comprises a plurality of electric battery cells 10. For the ease of representation, only some of the electric battery cells 10 are equipped with a reference sign in Figure 1. Within the electric energy storage system 100, the electric battery cells are connected in series by appropriate bus bars. More generally speaking, the busbars may be designated as electric cell connection lines 38.

By the serial connection of the battery cells 10, the electric voltages provided by the electric battery cells 10 are summed up to a voltage of the electric energy storage system 100.

In the present example, the electric battery cells 10 are arranged in two parallel stacks.

In the present example, the electric energy storage system 100 comprises a total of 96 electric battery cells 10, i.e. two stacks of 48 electric battery cells 10 are provided. Each electric battery cell may be configured to provide a voltage of 8 V as will be explained in more detail further below. Since all 96 battery cells are connected in series, the electric energy storage system is configured to generate a voltage of 768 V. Moreover, each electric battery cell 10 may be configured to provide a nominal electric capacity of 500 Wh. Thus, the electric energy storage system 100 is configured to provide an electric capacity of 48 kWh.

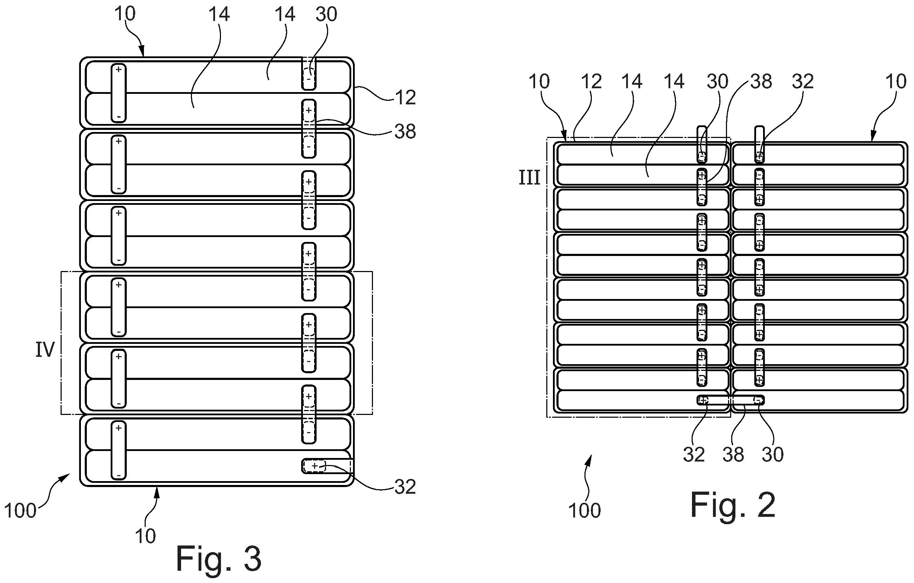

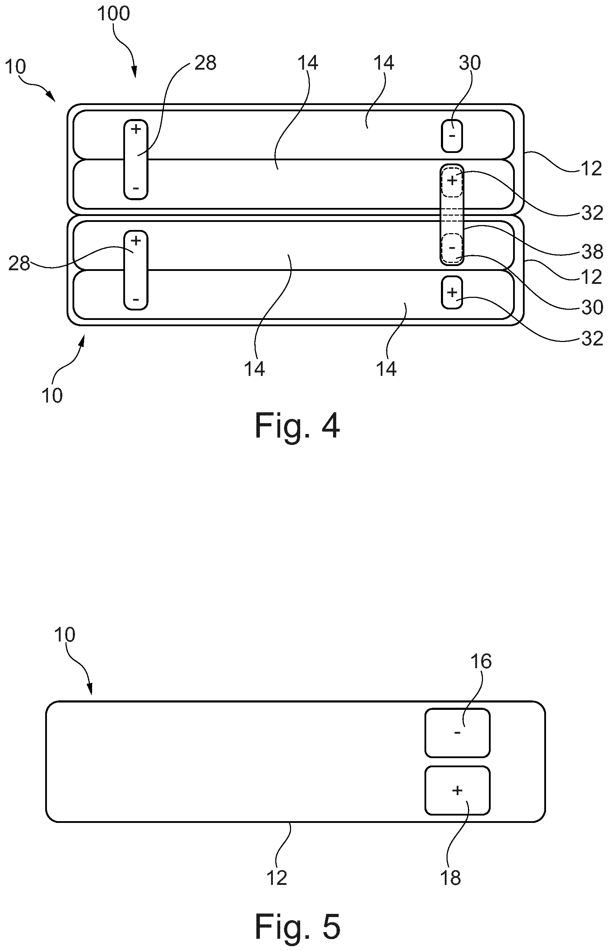

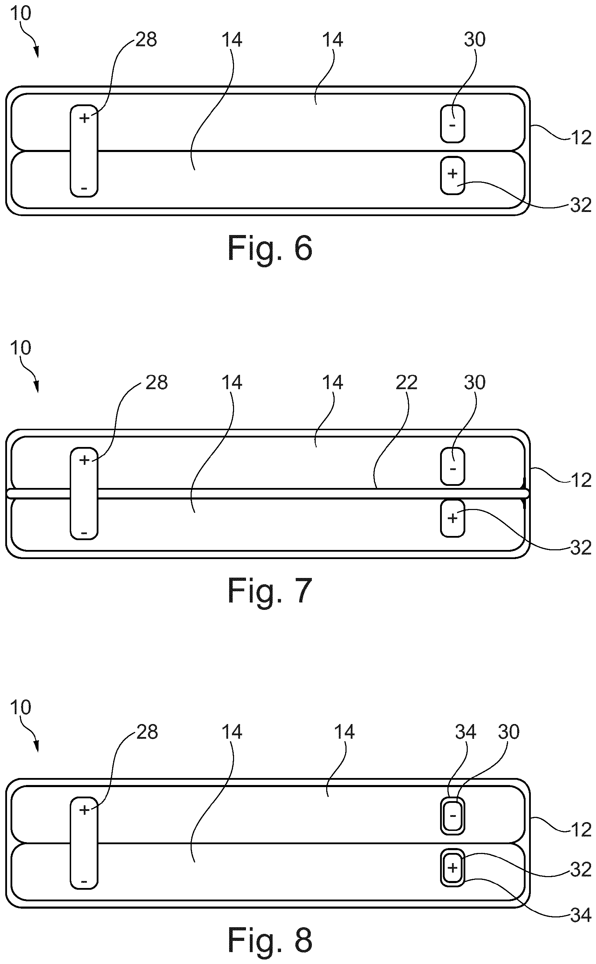

Figures 5 and 6 show one exemplary electric battery cell 10 in a top view. For the ease of explanation, the electric battery cells 10 are represented without a cell lid, i.e. without a top cover in Figures 2 to 4.

The electric battery cell 10 comprises a battery cell enclosure 12.

Inside the battery cell enclosure, two electrode packages 14 are arranged which are formed as an electrode stack and arranged adjacent to each other. Each electrode package 14 comprises at least one cathode and at least one anode (not shown).

The two electrode packages 14 are electrically connected with each other via the internal collectors 28, wherein the two electrode packages 14 are connected in series. This can be seen by the "+" and "-" symbols of the two electrode packages 14 marking the poles of the respective electrode packages 14.

On the outside of the battery cell enclosure 12 a first electric terminal 16 and a second electric terminal 18 are arranged. These electric terminals 16, 18 are electrically connected to the electric ends 30, 32 of the series-connected electrode packages 14. Thereby, the electric voltage of the series connection can be supplied via the electric terminals 16, 18.

In the example of Figures 5 and 6, the first electric terminal 16 and the second electric terminal 18 are arranged in the vicinity of, respectively above, the first end 30 and the second end 32, respectively.

The electric battery cell 10 of Figures 5 and 6 also comprises a degassing valve 20 which is not visible in the view of Figures 5 and 6.

Figure 7 shows another example of an electric battery cell 10.

As in the view of Figure 6, also in the view of Figure 7, the lid of the electric battery cell 10 has been removed.

This example is similar to the example shown in Figures 5 and 6. Therefore, in the following, only the distinguishing features are described.

As it can be seen in Fig. 7, an electric insulation means 22 is provided between the two electrode packages 14 to avoid an electric contact between them.

This ensures that besides the serial connection realized by the internal collector 28, no electric contact or connection is established inside the enclosure 12 between the electrode packages 14. The insulation means 22 may be configured as or comprise a plate-shaped or sheet-shaped element.

Figure 8 shows a further example of a battery cell 10.

As before, only the distinguishing features over the above-described examples will be explained. Similar to the representation of Figure 7, a lid of the electric battery cell 10 is removed such that the interior of the electric battery cell 10 is visible.

As it can be seen in Fig. 8, the first end 30 of the serial connection of the electrode packages 14 which is electrically connected to the first terminal (not shown) and the second end 32 of the serial connection of the electrode packages 14 which is electrically connected to the second terminal (not shown) are electrically insulated by insulation means 34.

In the present example, the insulation means 34 are designed as sleeves which are wrapped around the first end 30 and the second end 32 respectively.

The insulation means 34 suppress electric arcing between the first end 30 and the second end 32 or between the first terminal and the second terminal, respectively.

Additionally or alternatively, the electric connection lines (not shown) connecting the first end 30 to the first terminal 14 and the second end 32 to the second terminal 16 may be insulated against each other. This allows to arrange the electric connection lines with minimum space in between without risking an electric arc between the lines due to the increased voltage of the battery cell 10.

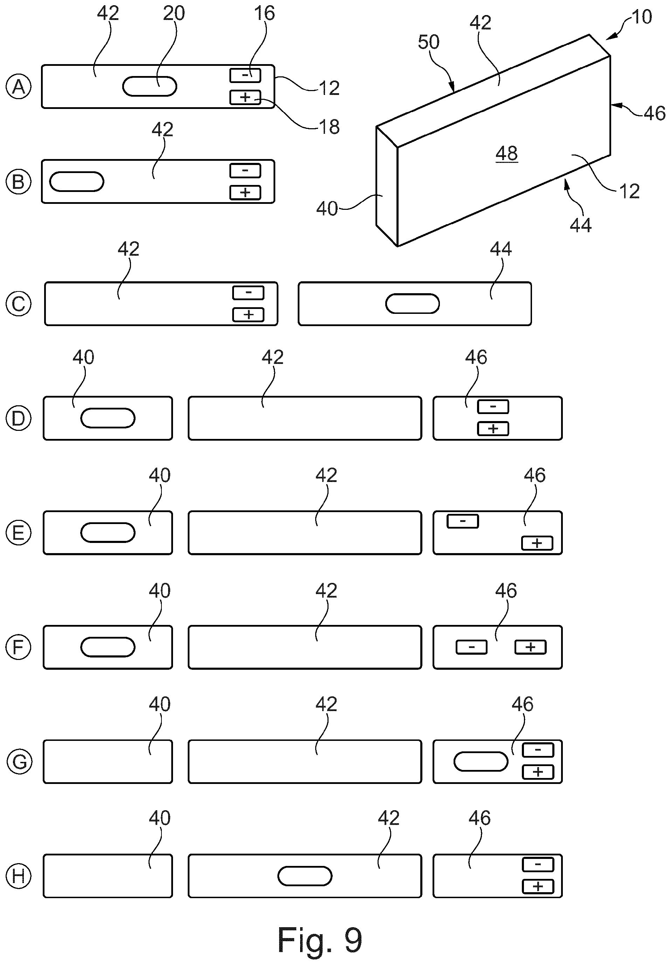

Figure 9 shows a range of further examples of the battery cell 10.

In the upper right corner of the drawing, a perspective view of a cuboid battery cell 10 is shown schematically in order to define the different sides of a cuboid battery cell 10.

The electric battery cell 10 comprises a first lateral side 40, an upper side 42, a bottom side 44, and a second lateral side 46. Moreover, the electric battery cell 10 comprises a front side 48 and a back side 50.

It is noted that the designations of the different sides of the cuboid electric battery cell 10 are associated with the view of the electric battery cell 10 in the upper right corner of Figure 9. This does not exclude that the electric battery cell 10 is used in a different orientation.

In the drawing, several examples A-H are shown line by line, wherein elements with the same visual appearance are identical in every example. Therefore, only in the first line A, each element has been labeled with reference signs.

According to example A, the degassing valve 20 is arranged in the middle of the upper side 42 and the first terminal 16 and the second terminal 18 are arranged in the right half of the upper side 42.

According to example B, the degassing valve 20 is arranged in the left half of the upper side 42, wherein the first terminal 16 and the second terminal 18 are arranged in the right half of the upper side 42. This example allows to keep the terminals 16, 18 away from chemicals sprayed out from an opened degassing valve 20.

According to example C, the first terminal 16 and the second terminal 18 are arranged in the right half of the upper side 42, wherein the degassing valve 20 is arranged on the opposing side, i.e. on the bottom side 44. This allows to keep the terminals 16, 18 away from chemicals sprayed out from an opened degassing valve 20, wherein this example is an improvement of the example B, since the chemicals are sprayed out on the opposing side of the enclosure 12.

According to example D, the degassing valve 20 is arranged on the first lateral side 40, wherein the first terminal 16 and the second terminal 18 are arranged on the opposing second lateral side 46. In this example, the distance between the degassing valve 20 and the terminals 16, 18 is increased compared to the example C.

The examples E and F are similar to example D, wherein they only differ from each other in the arrangement of the terminals 16, 18.

According to example E, the terminals 16, 18 are arranged in diagonally opposing corners of the second lateral side 46.

In example F, the terminals 16, 18 are arranged in different halves of the second lateral side 46. Each arrangement of the terminals 16, 18 can be realized by corresponding electric connection lines inside the battery cell enclosure 12.

According to the examples G and H, the first terminal 16 and the second terminal 18 are arranged in the right half of the second lateral side 46 and adjacent to each other. According to example G, the degassing valve 20 is arranged adjacent to the first terminal 16 and to the second terminal 18, i.e. on the same side.

According to example H, the degassing valve 20 is arranged on the upper side 42.

The electric battery cells 10 according to the examples D to H may be used in an electric energy storage system 100. When doing so, they can first be inserted with the first lateral side 40 into an energy storage system enclosure or into a battery enclosure through a relatively small opening corresponding to the size of the first lateral side 40 and the second lateral side 46 since the battery cell 10 may be inserted in such way that all terminals 16, 18 are then facing towards the opening and therefore reachable through the opening. This allows an easy assembling and connecting of the battery cells in the battery or in the energy storage.

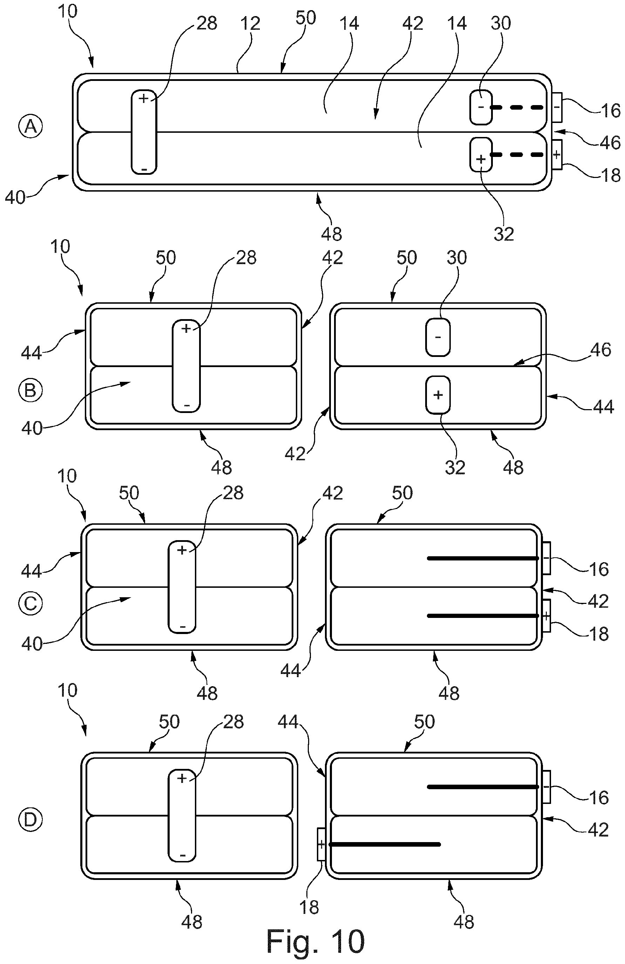

Figure 10 shows additional examples of the electric battery cell 10.

In particular, these examples relate to different arrangements of electric lines inside and outside the battery cell enclosure 12.

Four examples A to D are shown.

According to example A, the first free end 30 and the second free end 32 of the electrode packages 14 are arranged on the upper side 42 of the battery cell 10. The internal collector 28 connecting the two electrode packages 14 in series is arranged on the same side as the first and second ends 30, 32. The first terminal 16 and the second terminal 18 may be arranged on the same side. Alternatively, as shown in Figure 10 A, the terminals 16, 18 may be arranged on the second lateral side 46. According to a further alternative, the terminals 16, 18 may be arranged on the first lateral side 40.

According to example B, the first end 30 and the second end 32 of the electrode packages 14 are arranged on the second lateral side 46 of the battery cell enclosure 12. The internal collector 28 connecting the two electrode packages 14 in series is arranged on the opposing side, i.e. on the first lateral side 40. The first terminal 16 and the second terminal 18 may be arranged on the same side as the first end 30 and the second end 32 outside the enclosure 12. Alternatively, the sides of the internal collector and the ends 30, 32 may be inverted.

According to example C, the internal collector 28 connecting the two electrode packages 14 in series is arranged on the first lateral side 40 of the enclosure 12. The first terminal 16 and the second terminal 18 are arranged on the upper side 42.

In example D, the internal collector 28 is provided as in Example C. However, the first terminal 16 and the second terminal 18 are arranged on opposite sides. More precisely, the first electric terminal 16 is arranged on the upper side 42 and the second electric terminal 18 is arranged on the bottom side 44.

The arrangement of the internal collectors 28 in the preceding examples A to D are only optional. I.e., each example A to D may be varied by arranging the internal collector 28 at other positions as the ones shown in the drawings.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 8: vehicle
- 10: electric battery cell
- 12: battery cell enclosure
- 14: electrode package
- 16: first electric terminal
- 18: second electric terminal
- 20: degassing valve
- 22: electric insulation means
- 28: internal collector
- 30: first end
- 32: second end
- 34: electric insulation means
- 36: electric cell connection line
- 38: electric cell connection line
- 40: first lateral side
- 42: upper side
- 44: bottom side
- 46: second lateral side
- 48: front side
- 50: back side
- 100: electric energy storage system

## Claims

1. An electric battery cell (10) for an electric energy storage system (100) of a vehicle, the battery cell (10) comprising:
a battery cell enclosure (12),
at least two electrode packages (14), each of the at least two electrode packages (14) comprising at least one cathode and at least one anode,
wherein the at least two electrode packages (14) are connected in series, and
wherein the at least two electrode packages (14) are arranged inside the battery cell enclosure (12).

2. The electric battery cell (10) according to claim 1, further comprising
a first electric terminal (16) and a second electric terminal (18),
wherein the first electric terminal (16) and the second electric terminal (18) are arranged on an outside of the enclosure (12), and wherein a first electric end of the series-connected at least two electrode packages (14) is electrically connected to the first electric terminal (16) and a second electric end of the series-connected at least two electrode packages (14) is electrically connected to the second electric terminal (18).

3. The electric battery cell (10) according to claim 2, wherein the first electric terminal (16) and the second electric terminal (18) are arranged on the same side of the enclosure (12) and
wherein the first electric terminal (16) and the second electric terminal (18) are arranged in the same half of the side of the enclosure or wherein the first electric terminal (16) and the second electric terminal (18) are arranged adjacent to diagonally opposite corners of a side of the enclosure (12).

4. The electric battery cell (10) according to claim 2 or 3, wherein the enclosure (12) is substantially cuboid and wherein the first electric terminal (16) and the second electric terminal (18) are arranged on a smallest outer surface of the enclosure (12).

5. The electric battery cell (10) according to any one of the preceding claims, further comprising a degassing valve (20) provided on the enclosure (12).

6. The electric battery cell (10) according to claim 5 and any one of claims 2 to 4, wherein the degassing valve (20) is arranged outside a virtual line extending between the first terminal (16) and the second terminal (18), or
wherein the degassing valve (20) is arranged on a different side of the battery cell enclosure (12) than the first electric terminal (16) and/or the second electric terminal (18).

7. The electric battery cell (10) according to any one of the preceding claims,
wherein each of the at least two electrode packages (14) is configured to generate the same voltage between the respective at least one cathode and the respective at least one anode.

8. The electric battery cell (10) according to any one of the preceding claims, wherein at least one of the at least two electrode packages (14) is configured to generate a nominal voltage between 3.5 volts and 4.5 volts.

9. The electric battery cell (10) according to any one of the preceding claims, wherein the series-connected at least two electrode packages (14) are configured to generate a nominal voltage of at least 7 volts.

10. The electric battery cell (10) according to any one of the preceding claims, wherein an electric insulation means (22) is provided between the at least two electrode packages (14).

11. The electric battery cell (10) according to claim 2 and any one of claims 3 to 10,
wherein the first electric terminal (16) and the second electric terminal (18) are electrically insulated from each other.

12. An electric energy storage system (100) for an electric vehicle, comprising a plurality of electric battery cells (10) according to one of the preceding claims, wherein the battery cells (10) are electrically connected in series.

13. A vehicle comprising an electric energy storage system (100) according to claim 12.

14. A method for producing an electric battery cell (10), the method comprising:
providing at least two electrode packages (14), each of the at least two electrode packages (14) comprising at least one cathode and at least one anode,
electrically connecting the at least two electrode packages (14) in series, and
arranging the at least two electrode packages (14) in a battery cell enclosure (12).

15. A method for adapting a nominal voltage of an electric battery cell (10), the electric battery cell (10) comprising at least two electrode packages (14), each of the at least two electrode packages (14) comprising at least one cathode and at least one anode, the method comprising:
- altering an electric connection of the at least two electrode packages (14) from a series connection to a parallel connection or
- altering an electric connection of the at least two electrode packages (14) from a parallel connection to a series connection.
